# EUROPEAN PATENT APPLICATION

(11) **EP 1 952 921 A2**
(43) Date of publication of application: **06.08.2008**
(21) Application number: 08001572.0
(22) Date of filing: 29.01.2008
(51) Int. Cl.: B23B 29/32, B23B 29/20

(54) **Revolving turret for a machine tool**

(30) Priority: 31.01.2007 IT MI20070148
(71) Applicant: Gildemeister Italiana S.p.A., 24030 Brembate Sopra (IT)
(72) Inventor: Rigolone, Franco, 24010 Ponteranica (IT); Rota, Renato, 24030 Carvico (IT); Gervasoni, Oscar, 24123 Bergamo (IT)
(74) Representative: Mayer, Hans Benno

(57) **Abstract**

In a revolving turret for a machine tool, in particular a single spindle lathe, between a contoured end portion of an automatic tool holder support and a recess formed in an extension of a driving gear wheel, is arranged an interexchangeable insert including a recess for housing the contoured end portion of a selected tool holder support supporting a respective rotary tool, the insert including, on a side thereof opposite to its recess, a stem to be coupled by a geometrical type of coupling to the recess formed on the driving gear wheel extension.

## Description

### BACKGROUND OF THE INVENTION

The present invention relates to a revolving turret for a machine tool, in particular for a single spindle lathe.

Machine tools of the above mentioned type usually comprise revolving turrets supporting, on a periphery thereof, several types of machining tools, including, for example, locally fixed tools or rotary tools driven by driving means arranged inside the turret.

Prior revolving turrets may be classified into two types.

In a first type of revolving turret, all the machining tools are driven.

In the second type of revolving turret, only the machining tool arranged at a workpiece machining position is rotatively driven.

For performing particular workpiece machining operations, it is frequently required that the overall turret be controllably revolved and, simultaneously, the machining tool must also perform a rotary movement.

An accurate movement of the revolving turret is obtained by an interpolating movement, advantageously controlled by the numeric control system itself of the machine tool.

The machine tool revolving turret generally comprises a controllably driven movable disc including a plurality of turret disc tool holder recesses, arranged in the circumferential direction of the disc, and so designed as to receive, for driving purposes, corresponding contoured end portions of the automatic machining tools.

In particular, the end portions of said automatic machining tools can be made, for example, by using templates according to the DIN 1809, DIN 5480 or DIN 5482 standards, or to parameters defined by the machining tool makers.

Also known is the fact that, in the prior art, revolving turret makers usually do not allow to assemble on their revolving turrets tool supports different from those specified in their catalogues.

In very few cases, as the tool machine is purchased or the revolving turret to be assembled thereon is selected, a client may also choose, if it would be technically possible, to use a modified turret allowing to also mount thereon automatic machining tool holder supports including power takeoff means different from those specified in the turret maker brochure.

In addition, in choosing modified machining tool holder supports, the client will be compelled to always mount the chosen machining tool holder support, that is having that same automatic fitting meeting the mentioned DIN standards.

### SUMMARY OF THE INVENTION

The main object of the present invention is to provide such a novel revolving turret which does not require complex mechanical operations for fitting thereto different machining tool holders, but which, on the contrary, allows the rotary machining tools to be quickly and very simple coupled to their supports.

Another object of the present invention is to provide such a revolving turret allowing a user to mount thereon automatic machining tool holder supports of any desired configuration, and optionally already available for the turret user, while permitting to mount on the same rotary turret disc automatic machining tool holder supports with power takeoff means different from those of the individual machining tool holder supports.

According to the present invention, the above mentioned aim is achieved by a revolving turret for a machine tool, in particular a single-spindle lathe, characterized in that, between a contoured end portion of an automatic machining tool holder support and a recess formed in an extension of a driving gear wheel, is arranged an interexchangeable insert including an insert recess for receiving said contoured end portion, and that said insert further includes, on a side thereof opposite to said insert recess, an insert stem which can be conveyed, by a geometrical type of coupling, to said recess of said driving gear wheel extension.

Further advantages of the invention are defined in the dependent claims, in the following disclosure and in the accompanying drawings.

### BRIEF DESCRIPTION OF THE DRAWINGS

The subject matter according to the present invention will be disclosed in a more detailed manner hereinafter with reference to an exemplary embodiment thereof, shown in the accompanying drawings, where:
Figure 1 is a schematic perspective view showing a revolving turret including prior driving means;
Figure 2 is a schematic cross-sectional view showing the turret disc and related machining tool holders; and
Figure 3 shows, on an enlarged scale, a detail of the turret disc with a machining tool holder.

### DESCRIPTION OF THE PREFERRED EMBODIMENT

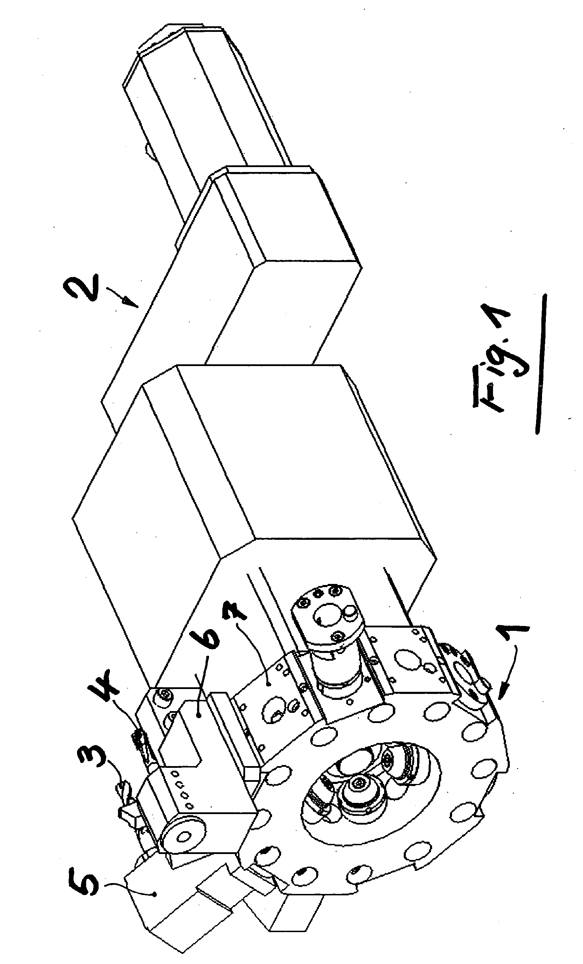

As is shown in figure 1, the turret disc, generally indicated by the reference number 1 and of a per se known type, is operatively coupled to rotatively driving means, generally indicated by the reference number 2, for controllably rotatively driving the disc 1 and the machining tools 3, 4, mounted, through known supports 5 and 6 in suitable recess 7 arranged on the circumference of the turret disc 1.

The constructional assemblies 1, 2, 3, 4, 5, 6 and 7 are of a type per se known in the prior art, and are made and sold also by the Applicant of this patent application.

As thereinabove mentioned, the turrets 1 for supporting the machining tool holders 5, 6, which turrets are also known from the prior art, are provided with inner mechanisms for controllably rotatively driving, for example, the machining tools shown in figure 1 by the reference numbers 3 and 4.

For mounting on the prior revolving turret 1 more standardized machining tools from different makers, it was generally required in the past to fit the power takeoff means, of different construction, of the machining tool holder assemblies 5, 6 by performing mechanical operations on the turret disc 1, with a consequent comparatively long dead time of the tool machine, as hereinabove mentioned.

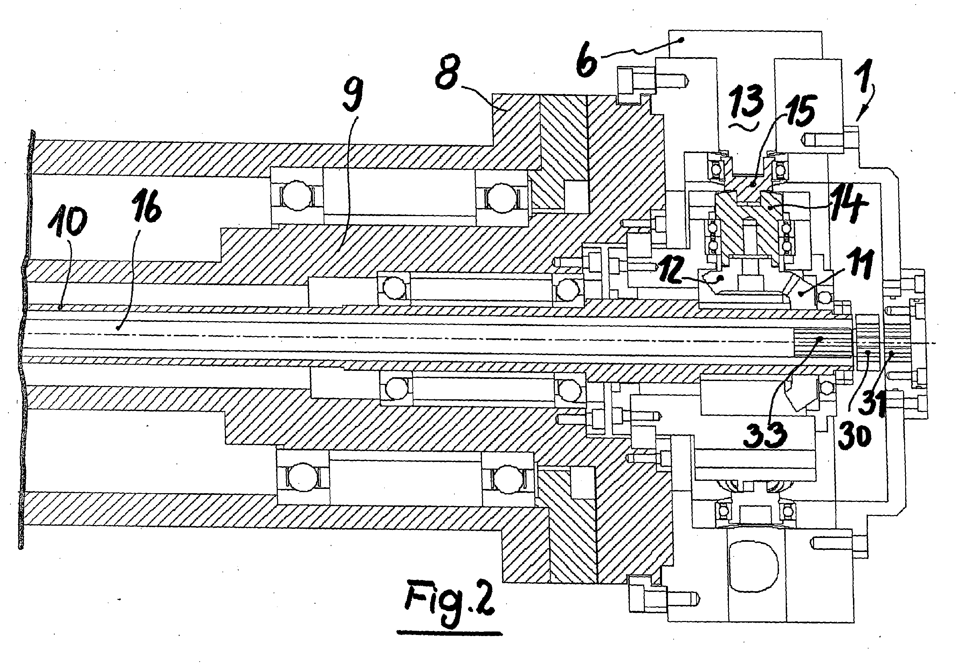

Figure 2 is a cross-sectional view showing a detail of a turret disc 1, which is generally supported by a fixed supporting construction 8 of the machine tool.

In particular, said supporting construction 8 comprises an inner shaft 9 for rotatively driving the revolving turret 1.

Concentrically to the shaft 9, a controlled rotary tubular shaft 10 is herein provided, which, through a pair of bevel gear wheels 11 and 12 allows to rotatively drive the machining tools, of which, in figure 2, only their support 6 is schematically shown.

In the following disclosure reference will be made to a single support 6 but, in this connection, it should be apparent that the disc 1 would bear a plurality of said supports for supporting different rotary machining tools, as schematically shown in figure 1.

As stated, the support 6 comprises a support extension with a contoured end portion 13 for rotatively driving a corresponding machining tool supported by said support 6.

The end portion 13, driven by an extension 14 of the bevel gear wheel 12, is adapted to assume different configurations, as disclosed, variable from maker to maker.

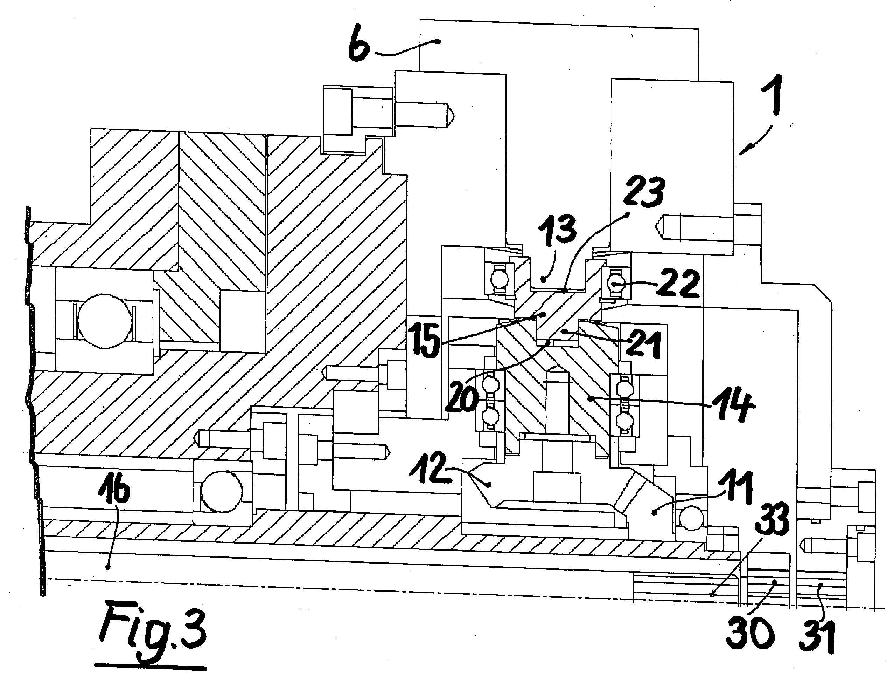

To eliminate the above complex fitting operations, for example for replacing the extension 14 together with the gear wheel 12, to properly fit the end portion 13 of a specific support 6, according to the present invention, a small interexchangeable insert 15, which can be easily interexchanged, and arranged inside the turret disc 1, as clearly shown in figure 3, showing all the related details inside the turret disc 1, is herein used.

This insert 15 comprises an insert stem 21 for engagement in a recess 20. In an operating condition, the machining tool 3, respectively 4, or any other selected machining tool of the turret 1, is rotatively driven by the driving extension 14 operatively coupled to said bevel gear wheel 12.

Moreover, the insert 15, together with its stem 21, can be assembled by means of a geometrical type of coupling with the extension 14 recess 20.

To properly protect the insert 15, said insert is advantageously supported by a bearing 22, and on a side thereof facing the contoured end portion 13 of the support 6, said insert 15 comprises a recess 23 of a shape precisely mating to that of the support 6 free end portion 13.

Said insert 15 comprises moreover a fitting 21 precisely mating the shape of the recess 20 formed in the extension 14 of the bevel gear wheel 12.

Thus, it is possible to mount on the turret disc 1, at will, several different machining tool holder supports 6, with different driving fittings 13.

To quick mount the tools on the different supports 6, it is sufficient to replace the inserts 15 with other inserts to be fitted to the selected end portion 13, as suggested by the tool holder supports 6 maker.

As already shown in figure 2, the shaft 16 has a grooved end portion 33 for locking, as the machining tools are exchanged, the rotary machining tool 3, 4 driving assembly 11, 12.

Concentrically to the shaft 10 is herein provided a further grooved shaft 16 which, as engaged at 30, allows to lock at a fixed position the driving assembly 12 and 14 in replacing the machining tools.

On the contrary, if the grooved shaft 16 is engaged at 30 and 31, then the turret disc 1 will be fixedly coupled to the driving assemblies 12 and 14 to provide a synchronized rotary movement of the latter driving assembly to correspondingly rotatively drive the rotary machining tools and the turret disc, as said turret disc and the corresponding machining tool must be rotatively driven.

The above disclosed turret provides a synchronized rotary movement of the turret disc 1 and the rotatively driving tool 3, 4 driving assembly as, since the turret disc 1 is actually rotatively driven simultaneously with its related machining tool. Moreover, the disclosed turret also allows a single machining tool to be rotatively indexed to its desired working position.

A possible modified embodiment provides to include in the turret a series of bevel gear wheels 12, for rotatively driving all the machining tools arranged on the circumference of the turret disc.

## Claims

1. A revolving turret (1) for a machine tool, in particular for a single spindle lathe, **characterized in that**, between a contoured end portion (13)of an automatic machining tool holder support (6) and a recess (20) formed in an extension (14) of a driving gear wheel (12) is arranged an interexchangeable insert (15) including an insert recess (23) for receiving said contoured end portion (13), and that said insert (15) further includes, on a side thereof opposite to said recess (23), an insert stem (21) which can be coupled, by a geometrical type of coupling, to said recess (20) of said driving gear wheel (12) extension (14).

2. A revolving turret, according to claim 1, **characterized in that** said insert (15) has an insert body supported by a bearing arranged in a body of said revolving turret (1).

3. A revolving turret, according to claim 1, **characterized in that** said turret comprises a turret shaft (16) having a grooved end portion (33) which, upon engaging in a corresponding grooved assembly (30), allows a machining tool to be replaced whereas, with said shaft (16) engaged in said grooved assemblies (30) and (31), said shaft (16) provides a synchronized rotary movement of a turret disc and a driving assembly for rotatively driving said machining tools.

4. A revolving turret, according to claim 1, **characterized in that** said driving assembly and said turret disc provide a synchronized driving assembly.

5. A revolving turret, according to claim 1, **characterized in that** said insert (15) is a variable insert adapted to receive machining tool holder supports (6) each having an end portion (13) with a different configuration depending on a position thereof on a circumference of the turret disc.
